# FASCICULE DE BREVET EUROPEEN

(11) **EP 1 172 306 B1**
(45) Date de publication et mention de la délivrance du brevet: **16.06.2004**
(21) Numéro de dépôt: 01202658.9
(22) Date de dépôt: 11.07.2001
(51) Int. Cl.: B65D 90/34

(54) **Système de mise à l'air de réservoir à liquide**
Entlüftungssystem für Flüssigkeitstank
Venting system for liquid tank

(30) Priorité: 13.07.2000 FR 0009286
(43) Date de publication de la demande: 16.01.2002
(73) Titulaire: Inergy Automotive Systems Research (SA), 1120 Bruxelles (BE)
(72) Inventeur: Ganachaud, Patrick, 53000 Laval (FR)
(74) Mandataire: Decamps, Alain René François

(56) Documents cités:
- EP-A- 0 803 671
- EP-A- 0 921 026
- FR-A- 2 774 950
- GB-A- 2 269 375
- US-A- 5 809 976

## Description

La présente invention concerne un système de mise à l'air de réservoir à liquide.

Les réservoirs à liquide, lorsqu'ils sont susceptibles d'être déplacés avec le liquide qu'ils contiennent sont généralement équipés d'un système de ventilation garantissant la sécurité par rapport à l'environnement alors que le réservoir est soumis à des sollicitations diverses : mouvements en tous sens et de toute amplitude, sollicitations thermiques, dépressions et surpressions.

Cette exigence est rencontrée dans le cas de réservoirs à carburant, en particulier lorsqu'ils sont montés sur des véhicules automobiles et qu'il est impératif d'empêcher la sortie de carburant liquide et de gérer les changements importants de pression et volume de gaz au cours du remplissage et pendant la totalité de la durée du stockage dans le réservoir.

Des solutions ont été développées pour résoudre ces problèmes, qui mettent en oeuvre des clapets de sécurité plongeant dans le réservoir et dont la partie supérieure traverse une paroi de celui-ci. Ces clapets débouchent généralement sur une conduite menant à un boîtier ou canister contenant une matière capable de piéger les vapeurs de liquide présentes dans les gaz en provenance du réservoir. Il n'est pas rare, toutefois, que des systèmes de ce type présentent encore des difficultés du fait qu'en raison des circonstances particulières d'utilisation, telles que mouvements brusques ou inclinaison excessive du véhicule, du liquide provenant du réservoir peut néanmoins passer la barrière du clapet de sécurité et se retrouver dans la conduite menant au canister, voire atteindre celui-ci et perturber le libre passage des vapeurs.

En remède à cet entraînement accidentel de liquide hors du réservoir, on a cherché à retenir le liquide qui s'échapperait par la conduite menant au canister en intercalant dans cette conduite un volume mort destiné à jouer le rôle de capacité pour recueillir le liquide et laisser passer librement les vapeurs.

Par ailleurs, lorsqu'il n'est pas possible de les intégrer dans le clapet de sécurité lui-même, des dispositifs de sécurité assurant l'interdiction de surremplissage du réservoir (dispositif « ISR ») ainsi que sa fermeture automatique en cas de retournement (dispositif « ROV » ou Roll-Over-Valve) doivent aussi être montés sur le réservoir ou dans son environnement proche. Des canalisations multiples relient alors entre eux le clapet, les dispositifs ISR et ROV ainsi que le canister. Ces canalisations et les nombreux raccords qu'elles nécessitent sont souvent la source de microfuites inacceptables en vue du programme et des objectifs de réduction drastique d'émissions EURO 2000. Il n'est pas rare non plus que ces canalisations multiples présentent des points bas et des siphons dans lesquels de petites quantités de liquide viennent s'accumuler et former autant d'obstacles au libre passage des gaz.

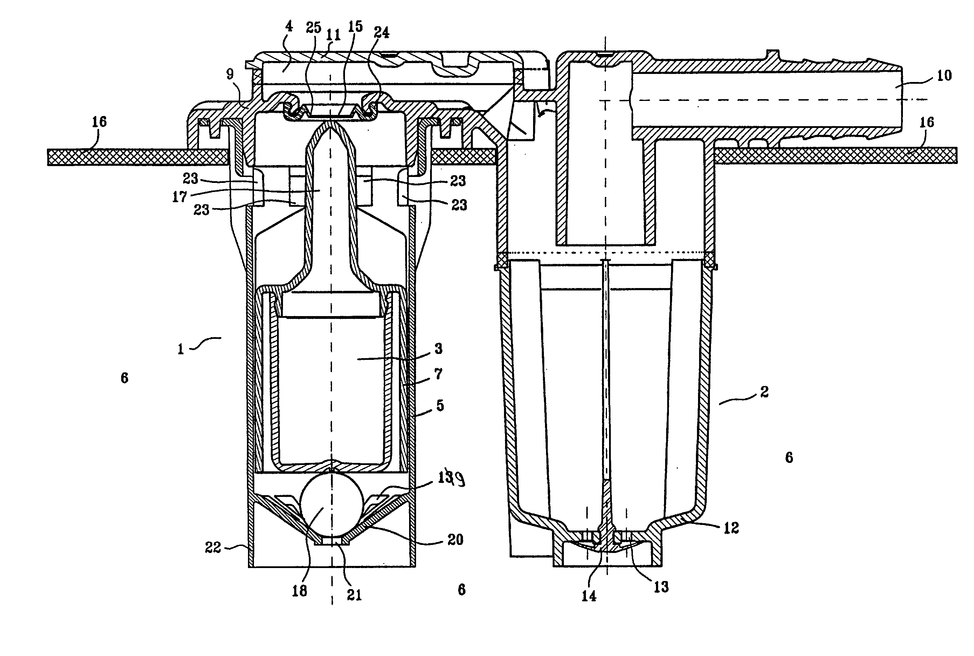

Il est connu par la demande de brevet britannique GB-A-2 269 375 qui divulgue les caractéristiques du préambule de la revendication 1 d'utiliser une capacité aux parois étanches au liquide, intégrée à l'intérieur d'un réservoir à carburant, dans laquelle on loge un clapet de sécurité (voir figure 2). Une ouverture calibrée 14 pratiquée au sommet de la capacité permet l'entrée du liquide lors d'inclinaisons trop importantes ou de mouvements trop violents du réservoir. Une soupape anti-retour 12 en forme de bec de canard permet la vidange de la capacité 11 lorsque le niveau du liquide a baissé.

Dans ce système, il subsiste cependant des problèmes liés à la fermeture intempestive du clapet ainsi qu'à l'augmentation de pression dans le réservoir qui peut perturber le bon fonctionnement du moteur. Par ailleurs, lorsque des gouttelettes de liquide de petite taille sont entraînées par l'orifice 14, elles peuvent, en raison de leur faible poids, être entraînées directement par le flux gazeux vers la canalisation de mise à l'air 7, sans tomber dans la capacité 11. Les dispositifs ISR et ROV doivent en outre encore être connectés au clapet à l'aide de canalisations externes au réservoir.

Par ailleurs, ce système connu ne protège pas non plus le réservoir contre l'effet d'une dépression excessive, maintenant dans ce cas le réservoir fermé et ne permettant pas sa ventilation.

L'invention vise à remédier aux inconvénients des systèmes de ventilation connus en fournissant un système qui évite le placement d'une capacité sur les canalisations externes au réservoir, permet la vidange du liquide retenu dans la capacité en cas de baisse de niveau de liquide dans le réservoir, respecte les normes environnementales les plus sévères et ne provoque ni surpression ni dépression à l'intérieur du réservoir.

A cet effet, l'invention concerne un système de misé à l'air d'un réservoir à liquide comprenant, d'une part, un volume fermé interne au réservoir et muni d'un dispositif de vidange, qui fait office de capacité destinée à recueillir et retenir des entraînements éventuels de liquide provenant du réservoir et, d'autre part un clapet à flotteur disposé dans le réservoir, situé hors du volume de la capacité et relié à celle-ci au moyen d'un conduit de circuit de mise à l'air, selon lequel le clapet comprend des moyens pour :
a) la ventilation du réservoir, en ce compris lorsque celui-ci est incliné par rapport à la position initiale pour laquelle il a été conçu,
b) l'empêchement de l'éjection de liquide hors du réservoir en cas d'inclinaison de celui-ci ou de production de vagues de liquide à l'intérieur du réservoir,
c) la fermeture automatique du réservoir en cas de retournement de celui-ci (fonction « ROV » ou « Roll-Over-Valve »),
d) le réglage du volume utile du réservoir et l'empêchement du remplissage du réservoir au-delà d'un niveau prédéterminé (fonction « ISR » ou « Interdiction de Sur-Remplissage »),
e) le dégazage du réservoir pendant son remplissage.

De préférence, le conduit de mise à l'air en communication avec le clapet constitue une extrémité d'un circuit de mise à l'air. Le circuit de mise à l'air peut être unique ou, au contraire, être présent en plusieurs exemplaires. De manière plus préférée encore, ce conduit constitue l'extrémité du circuit unique de mise à l'air.

Le réservoir à liquide est une enceinte fermée, de formes diverses, généralement étanche vis-à-vis de l'extérieur, qui peut être équipé de divers accessoires internes ou traversant la paroi de l'enceinte. Le réservoir peut contenir tout type de liquide organique, inorganique ou mélange de tels liquides. En particulier, il est un réservoir à carburant pour véhicules automobiles. Tous les types de carburant utilisés par les véhicules automobiles peuvent être stockés dans le réservoir à liquide tels que notamment l'essence et le gasoil et, en particulier, le gasoil.

Le système de mise à l'air de réservoir à liquide objet de l'invention est un dispositif comprenant plusieurs éléments dont la fonction globale est de permettre le dégazage d'un réservoir lors de son remplissage et sa ventilation en période d'utilisation et de consommation du liquide qu'il contient, tout en maintenant l'environnement extérieur à l'abri de toute fuite ou émanation de gaz indésirables.

Selon l'invention, le système de mise à l'air comprend un volume fermé interne au réservoir. Par volume fermé, on entend désigner un volume de forme quelconque délimité par des parois étanches aux liquides et aux gaz. Ce volume est disposé à l'intérieur du réservoir et communique avec le clapet au moyen du conduit de mise à l'air dont une extrémité est reliée au clapet. Sa fonction est de constituer une capacité capable de recueillir et de retenir les entraînements éventuels de liquide provenant du réservoir qui auraient franchi la barrière du clapet.

Le volume de cette capacité est choisi de taille suffisante pour recueillir l'ensemble des entraînements liquides susceptibles de franchir la barrière du clapet lors de circonstances particulières, notamment lorsque le réservoir est plein ou proche de son niveau de remplissage maximum. Ce volume dépend aussi des dimensions et de la conception même du clapet ainsi que du diamètre du conduit le reliant à celui-ci.

Selon l'invention, le volume fermé interne au réservoir faisant office de capacité du système de mise à l'air comprend un dispositif de vidange. Par dispositif de vidange, on entend désigner une soupape, située en un point bas de la capacité, qui peut s'ouvrir lorsqu'un poids suffisant de liquide a été recueilli dans cette capacité et qui communique directement avec le volume intérieur du réservoir. La fonction de ce dispositif de vidange est de recycler le liquide qui a été entraîné avec les gaz sortant du réservoir et d'empêcher un remplissage de la capacité au-delà d'un niveau maximum prédéterminé dépendant de la forme de cette capacité et des caractéristiques de la soupape.

Le système de mise à l'air selon l'invention comprend aussi un clapet à flotteur, c'est-à-dire un dispositif permettant l'ouverture du réservoir à l'aide d'une soupape commandée par le déplacement d'un flotteur entraîné par le niveau de liquide présent dans le réservoir.

Selon l'invention, le clapet à flotteur est disposé à l'intérieur du réservoir.

Alternativement, le clapet à flotteur peut aussi être disposé dans le réservoir et posséder une partie supérieure qui traverse une paroi de ce réservoir. La traversée de la paroi du réservoir par la partie supérieure du clapet est réalisée dans des conditions étanches par toute technique appropriée et bien connue par elle-même. Comme exemple de technique d'étanchéité que l'on peut utiliser, on peut citer, de manière non limitative, la soudure de la partie supérieure du clapet avec la paroi découpée du réservoir, le serrage étanche ou l'utilisation d'un joint d'étanchéité adapté à la nature du liquide contenu.

La partie supérieure du clapet émergeant de la paroi du réservoir est, dans le système de mise à l'air selon l'invention, en communication avec un conduit qui constitue une extrémité d'un circuit de mise à l'air. En d'autres termes, les gaz sortant du réservoir ou y entrant circulent dans ce conduit qui est relié d'un côté de manière étanche à la partie supérieure du clapet débouchant sur la soupape actionnée par le flotteur et qui communique de l'autre côté avec un circuit aboutissant à l'atmosphère extérieure.

Selon l'invention, le clapet à flotteur est situé hors du volume de la capacité. Il peut, indifféremment, être situé dans le voisinage immédiat de la capacité ou, au contraire, être situé dans une région du réservoir éloignée de cette dernière. Dans chaque cas, toutefois, le clapet à flotteur est relié à la capacité au moyen du conduit de mise à l'air décrit supra. De préférence, le clapet est disposé dans le voisinage immédiat de la capacité.

Une première fonction importante du clapet selon l'invention est de ventiler le réservoir lorsqu'il est placé dans la position pour laquelle il a été conçu ou lorsqu'il est incliné par rapport à cette position.

Par incliné, on désigne l'état du réservoir lorsqu'il est soumis à des mouvements de faible amplitude résultant de l'utilisation du réservoir et du liquide contenu compatibles avec l'absence d'écoulement de liquide par gravité hors du réservoir via le clapet.

Afin de réaliser cette fonction, le clapet selon l'invention devra comprendre des moyens pour assurer cette ventilation. Tous les moyens permettant d'assurer cette fonction dans des conditions favorables à la sécurité de l'utilisateur peuvent convenir.

Comme exemple de tels moyens, on peut citer le clapet à flotteur dont le flotteur est solidaire d'une soupape en communication avec l'extérieur et dont la soupape reste ouverte dans les conditions normales d'utilisation. Les dimensions du flotteur et de l'élément solidaire portant la soupape sont conçues pour permettre la ventilation dans les conditions normales, c'est-à-dire lorsque le réservoir est incliné ou non et que le niveau de liquide avant inclinaison ne dépasse pas un certain seuil à l'intérieur du réservoir et que l'angle d'inclinaison éventuel ne dépasse pas un angle critique.

Un moyen ayant donné de bons résultats est celui du clapet à flotteur solidaire d'une soupape qui reste ouverte lorsque le clapet se trouve en position verticale ou inclinée.

Une deuxième fonction importante du clapet de sécurité selon l'invention est d'empêcher l'éjection de liquide hors du réservoir lorsque celui-ci est incliné comme décrit supra ou qu'il y a production de vagues de liquide en son intérieur. Le terme empêcher comprend aussi, dans le cas du clapet selon l'invention, les empêchements partiels de même que les limitations à l'écoulement libre de liquide hors du réservoir.

Les vagues de liquide sont les mouvements hydrodynamiques qui prennent naissance à la surface du liquide et peuvent se propager dans toute sa masse dans le réservoir lorsque celui-ci est animé de mouvements en sens divers résultant de son utilisation.

Le clapet de sécurité selon l'invention comprend des moyens pour empêcher l'éjection de liquide en cas de trop grande inclinaison du réservoir ou en cas de production de vagues de liquide de trop grande ampleur en son intérieur.

Tous les moyens efficaces permettant d'obturer les orifices de passage du liquide vers l'extérieur en cas de trop forte inclinaison ou de vagues importantes dans le réservoir peuvent convenir.

Un exemple de tels moyens est le clapet à flotteur solidaire d'une soupape d'obturation. Le flotteur coulisse dans un fût qui peut, en variante, se prolonger sous le clapet et au sommet duquel se trouvent les ouïes de pénétration du liquide dans le clapet. Un ressort appliqué à la base du flotteur permet, selon un mode particulier de réalisation, de compenser, en tout ou en partie, les forces de frottement du flotteur lors de son coulissement sur les parois internes du fût.

Un dimensionnement judicieux du flotteur, en particulier de sa hauteur, de la soupape d'obturation ainsi que de la puissance du ressort éventuel, permet de régler avec précision l'angle d'inclinaison à partir duquel un réservoir rempli à son niveau maximum donne lieu à la fermeture du clapet et à l'isolement du contenu du réservoir. De même, un dimensionnement soigné de la hauteur du prolongement du fût sous le clapet permet d'agir sur la sensibilité de la fermeture du clapet à l'énergie d'une vague donnée de liquide dans le réservoir.

Un moyen qui a donné de bons résultats est un clapet à flotteur, coulissant dans un fût, solidaire d'une soupape capable d'obturer le conduit de passage des gaz. Le flotteur repose en outre sur une bille dense qui vient se loger dans un puits tronconique renversé lorsque l'ensemble clapet - réservoir est dans une position non inclinée. Lorsque l'inclinaison dépasse un certain angle, qui est fonction de la masse de la bille, de l'angle des parois latérales du puits ainsi que du poids du flotteur et des forces de frottement de celui-ci dans le fût, la bille s'échappe du puits et vient soulever le flotteur et commander la fermeture de la soupape.

Une autre fonction importante du clapet selon l'invention réside dans sa faculté de se fermer automatiquement dès que le réservoir amorce un retournement (fonction connue sous le vocable "Roll-Over-Valve", en abrégé ROV, en langue anglaise). Par retournement, on désigne un mouvement d'amplitude suffisante pour que le niveau de liquide dans le réservoir puisse atteindre le clapet sous l'effet de la seule gravité. En particulier, ce terme désigne aussi toute situation dans laquelle le clapet se retrouve noyé dans le liquide du réservoir. Plus particulièrement encore, il désigne la situation dans laquelle le réservoir a subi une rotation de 180 ° par rapport à la position initiale pour laquelle il a été conçu.

Cette fermeture survient automatiquement, c'est-à-dire sans autre intervention extérieure au clapet, fut-elle humaine ou le fait d'un moteur ou dispositif quelconques susceptibles d'apporter de l'énergie.

Une autre fonction assurée par le clapet selon l'invention est la fixation du volume utile du réservoir et l'empêchement du remplissage du réservoir au-delà d'un volume prédéterminé lors de l'opération de remplissage (appelée aussi "Interdiction de Sur-Remplissage" ou ISR en abrégé).

Par volume utile on entend désigner le volume maximum admissible pour le liquide introduit dans le réservoir compatible avec une utilisation sûre ne donnant pas lieu à débordement ni danger ou pollution de l'extérieur.

Le clapet de sécurité selon l'invention comprend aussi des moyens pour régler le volume utile du réservoir ainsi que pour assurer la fonction ISR.

Tous les moyens sûr permettant d'assurer ces fonctions à l'aide d'un clapet unique peuvent convenir.

De préférence, on utilise un clapet qui ne nécessite la présence et le montage d'aucune canalisation de communication avec la tubulure de remplissage du réservoir. Un tel clapet comprend un flotteur portant une soupape qui se ferme une fois atteint le niveau utile de liquide dans le réservoir. Le siège de soupape est étanche aux liquides et aux gaz et peut résister à la surpression qui s'installe dans le réservoir dès la fermeture de la soupape. Ce clapet préféré est bien adapté aux réservoirs dont le remplissage se fait au moyen d'un système automatique qui coupe l'admission de liquide.

Une autre fonction importante du clapet selon l'invention est la possibilité d'effectuer un dégazage du réservoir, sur lequel il est monté, pendant le remplissage de celui-ci.

Tous les moyens aptes à permettre cette fonction peuvent être utilisés dans le clapet selon l'invention.

On peut, par exemple, utiliser un clapet à flotteur portant un élément d'obturation.

Un clapet à flotteur solidaire d'une soupape qui reste ouverte lorsque le niveau de liquide dans le réservoir n'entraîne pas le flotteur au-delà d'un certain niveau a donné d'excellents résultats.

Il est en outre intéressant, dans une autre forme de réalisation particulièrement préférée, de munir le clapet d'un fût qui se prolonge suffisamment vers le bas sous le siège du flotteur, afin d'éviter les fermetures intempestives du clapet lors de l'introduction d'un grand débit de liquide dans le réservoir et la production de vagues de grande amplitude en son intérieur. Outre son action habituelle contre l'éjection de liquide hors du réservoir lorsque celui-ci est en mouvement, un tel fût contribue aussi à assurer la ventilation permanente du réservoir durant la totalité de l'opération de remplissage.

Selon une forme particulière de l'invention, le clapet de sécurité comprend une soupape équipée d'un joint souple.

Par soupape, on entend un dispositif de fermeture permettant d'annuler à volonté l'échange de matière entre une enceinte et son environnement extérieur.

Le joint souple qui équipe la soupape comprend tout joint déformable susceptible de pouvoir être monté sur la soupape.

Selon cette forme de réalisation du clapet selon l'invention, le joint peut être monté sur la tête du clapet et coopère avec la partie mobile de la soupape. De préférence cette partie mobile a la forme d'un pointeau qui coopère avec le siège de soupape.

Alternativement, le joint peut être monté sur la partie mobile de la soupape avec un siège plan sur la tête du clapet.

Des moyens pour une fermeture automatique du clapet selon l'invention en cas de retournement du réservoir sont également présents. Tous les moyens capables de fermer et d'isoler le réservoir en cas de retournement conviennent.

Un exemple d'un tel moyen est celui réalisé par les clapets complexes comprenant un flotteur portant une soupape d'obturation et lestés au moyen d'un corps dense qui leur est solidaire, par exemple des flotteurs creux enfermant le corps dense à l'intérieur de leur paroi et un ressort contrebalançant la majeure partie du poids du corps dense lorsque le clapet est en position verticale de repos. Lorsqu'il y a retournement du réservoir et du clapet, le poids du corps dense s'additionne à la poussée du ressort pour pousser le flotteur ainsi immergé vers le siège de soupape.

Un moyen comprenant un clapet muni d'un flotteur, sous lequel est disposée une cage à puits ajouré dans laquelle repose un bille dense qui, lorsqu'elle se déplace sous l'effet de la gravité repousse vers le haut le flotteur du clapet vers le siège de soupape en cas de retournement du clapet a donné d'excellents résultats.

Une autre fonction qui peut être intégrée au clapet de sécurité selon l'invention est celle qui assure la ventilation de sécurité du réservoir dans des situations de dépression ou de surpression excessives par rapport à la pression extérieure.

En effet, dans certaines situations, il peut se développer une dépression à l'intérieur d'un réservoir, par exemple lorsque celui-ci est abandonné fermé et que la température descend de manière notable, provoquant ainsi la contraction du liquide et, dans une plus grande mesure, du gaz présent dans le réservoir fermé. Une autre situation de dépression est celle où le réservoir est fermé et où il y a consommation rapide et continue de liquide. Une trop grande dépression à l'intérieur du réservoir pourrait conduire à certains dangers et doit être évitée par la mise en oeuvre de moyens pour ventiler le réservoir à partir d'un certain seuil de dépression.

Dans d'autres situations, par exemple en cas de stockage du réservoir plein, clapet fermé dans une atmosphère où la température augmente rapidement d'une manière importante, il peut se développer une surpression dangereuse à l'intérieur du réservoir.

Tous les moyens aptes à prémunir le réservoir de telles dépression ou surpression excessives peuvent être utilisés dans le clapet selon l'invention.

On peut, par exemple utiliser un système permettant l'introduction d'air par un orifice de passage secondaire.

On peut contrôler l'ouverture de cet orifice de passage secondaire au moyen d'un joint supplémentaire distinct de celui qui assure l'étanchéité de la soupape ou encore, en variante, au moyen d'une bille de faible masse disposée dans un puits à faible distance sous un orifice de sortie et jouant ainsi le rôle d'un dispositif anti-retour pour l'air entrant dans le réservoir.

On peut aussi intégrer cette sécurité de dépression au joint souple réalisant l'étanchéité de la soupape. De préférence, on n'utilise pas d'orifice de passage secondaire distinct de l'orifice principal de ventilation, mais plutôt un système de soupape pouvant être alimentée par un faible débit d'air provenant de la partie supérieure de la tête du clapet. Cette soupape ne s'ouvre que sous l'influence d'une pression interne de tarage correspondant à la pression maximale qui soit compatible avec une utilisation sûre du réservoir.

De préférence, on équipe la soupape d'au moins un joint souple qui se déforme pour déclencher l'ouverture d'un passage vers l'extérieur du réservoir lorsqu'un certain seuil de pression ou de dépression est atteint.

De préférence le joint souple a une forme annulaire et comprend des lèvres déformables qui assurent la fermeture étanche du réservoir, assurant ainsi sa sécurité en cas de dépression et de surpression. Ces lèvres ont une épaisseur adaptée à pouvoir se déformer sous l'influence d'une différence de pression donnée s'exerçant sur leurs faces opposées. Pour chaque joint, il existe un seuil de surpression ou de dépression pour lequel les lèvres se déforment suffisamment pour ouvrir un passage dans le siège de soupape et mettre ainsi en communication l'intérieur du réservoir avec l'extérieur.

Selon l'invention, le joint souple est capable de se déformer et de s'ouvrir dans les situations de dépression et de surpression par rapport à la pression extérieure. Des joints différents peuvent assurer la sécurité de surpression et celle de dépression.

De préférence, le même joint assure les sécurités de dépression et de surpression. Dans ce cas, il peut comprendre des lèvres se déformant sous l'influence de la dépression distinctes d'autres lèvres faisant aussi partie du même joint et qui se déforment en cas de surpression.

De manière particulièrement préférée, le joint souple assurant les sécurités de dépression et de surpression est le même que le joint souple qui assure l'étanchéité de la soupape du clapet.

Une réalisation tout particulièrement préférée est celle dans laquelle le joint souple est équipé de lèvres qui assurent la sécurité de dépression distinctes de celles assurant la sécurité de surpression.

Selon une forme de réalisation avantageuse du système de mise à l'air, le dispositif de vidange de la capacité est constitué par une membrane souple qui ferme un orifice situé dans un point bas de la capacité.

Une membrane réalisée en matériau élastomère en forme de parapluie renversé a donné d'excellents résultats.

La présente invention a aussi pour objet l'utilisation du système de mise à l'air décrit *supra* pour mettre à l'air un réservoir à carburant dans un véhicule automobile.

L'utilisation de ce système est particulièrement adapté à la mise à l'air d'un réservoir dans lequel le carburant est du gasoil destiné à alimenter un moteur Diesel.

La figure qui suit a pour but d'illustrer l'invention, sans en limiter en aucune façon sa portée.

Elle représente une vue en coupe d'un système de mise à l'air d'un réservoir 6 à gasoil, monté sur un véhicule, comprenant un clapet 1 et une capacité 2 disposée à proximité. Un conduit 4 relie la partie supérieure du clapet 1 à celle de la capacité 2. Un conduit 10 de sortie des gaz est relié à un canister (non illustré). La partie inférieure 12 de la capacité 2 est percée d'orifices 13 obturés par une membrane déformable 14, en forme de parapluie renversé, qui fait office de vanne anti-retour.

Le clapet 1 comprend essentiellement quatre parties distinctes, un fût 5 de forme cylindrique, plongé dans un réservoir, dans lequel coulisse une partie mobile 7. Le fût 5 est surmonté d'une tête 9 qui dépasse de la paroi 16 du réservoir 6. La tête 9 et une paroi 11 définissent un espace fermé en forme de canalisation 4.

La partie mobile 7 se compose d'un flotteur 3 surmonté par un pointeau 17 qui lui est solidaire et qui peut venir obturer un orifice 15 situé au centre de la tête 9.

Le flotteur 3 repose sur une bille 18 en matière dense qui est libre de se mouvoir dans un puits 19 situé en position centrale d'un fond 20 solidaire des parois du fût 5. Une ouverture 21 perce la base du puits 19 et permet le passage du liquide provenant du réservoir. D'autres ouïes (non représentées) percent aussi les parois du puits 19 et le fond 20.

Le fût 5 se prolonge sous l'ouverture 21 par une jupe 22 qui a pour but de limiter lors de la mise à l'air la sensibilité du clapet aux vagues de liquides qui peuvent parcourir le réservoir.

Des ouïes 23 percent la partie supérieure du fût 5 et servent à l'évacuation de gaz hors du réservoir.

Un joint annulaire 24 muni de lèvres 25 déformables disposé sur le pourtour de l'orifice 15 coopère avec le pointeau 17 porté par le flotteur 3 pour former une soupape réglant l'ouverture et la fermeture du clapet.

Le fonctionnement du système de mise à l'air représenté à la figure est le suivant.

Lorsque le liquide présent dans le réservoir est en cours d'utilisation et que son niveau dans le réservoir est significativement inférieur à son niveau de sécurité maximum autorisé, il n'atteint pas la base du flotteur 3. En cas de mouvement d'inclinaison du réservoir, le clapet suit le mouvement et s'incline du même angle que le réservoir par rapport à sa position initiale. Si l'on accroît l'angle d'inclinaison du réservoir, aussi longtemps que le poids de la bille dense 18 augmenté du poids du couple flotteur 3 - pointeau 17 et des forces de frottement garde une composante tangentielle à la paroi du puits 19 située du côté de l'inclinaison inférieure à sa composante verticale, la bille 18 restera logée au fond du puits 19 et le pointeau 17 porté par le flotteur 3 maintiendra un passage entre sa partie supérieure et le siège de soupape délimité par le joint 24. Dès qu'il y aura un léger dépassement de la valeur de la composante tangentielle par rapport à celle de la composante verticale en raison de l'accroissement de l'angle d'inclinaison du réservoir, la bille 18 commencera à se déplacer sur la paroi du puits située du côté de l'inclinaison et provoquera le soulèvement du flotteur et le rapprochement du pointeau 17 du joint 24. Durant toute la période pendant laquelle la soupape reste ouverte, une ventilation du réservoir peut se produire. La situation se modifiera lorsque l'angle d'inclinaison sera suffisant pour provoquer le contact du pointeau mobile 17 avec le joint 24. A ce moment, le clapet se ferme et la ventilation du réservoir s'arrête, empêchant de ce fait l'éjection de liquide hors du réservoir incliné.

En cas de production de vagues à l'intérieur du réservoir, lorsque leur énergie est suffisante pour soulever le flotteur 3 compte tenu cependant de l'amortissement créé par la jupe 22, le clapet se ferme et évite également l'éjection de liquide hors du réservoir.

En cas de retournement du réservoir, la bille dense 18 vient appuyer de tout son poids sur le flotteur 3 et ferme rapidement le passage au liquide grâce au contact du pointeau 17 avec le joint 24.

Pendant l'opération de remplissage du réservoir, lorsque le volume de sécurité maximal admissible de liquide est atteint, le flotteur 3, porté par le liquide se soulève et vient obturer la soupape grâce au contact du pointeau 17 avec le joint 24. Le volume maximal admissible peut être réglé par le dimensionnement de la hauteur du flotteur 3 et du pointeau 17 ainsi que par ajustement de la ligne de flottaison du flotteur 3.

Si l'on tente de remplir le réservoir avec du liquide au-delà du niveau maximal admissible, la pression augmente à l'intérieur du réservoir et le liquide commence à monter dans la tubulure de remplissage d'où il ne tardera pas à agir sur le dispositif d'arrêt automatique de ce même système de remplissage.

Pendant toute la période de remplissage durant laquelle le flotteur 3 reste à sa position la plus basse et pendant celle où le flotteur commence à monter dans le fût 5 mais n'a pas encore atteint le niveau suffisant pour que le pointeau 17 entre en contact avec le joint 24, le dégazage du réservoir peut se poursuivre.

Lorsque le réservoir plein est laissé en position de clapet fermé et que la pression vienne à augmenter fortement à l'intérieur en raison d'une cause quelconque, par exemple en cas d'élévation importante de la température, les lèvres 25 du joint 24 en contact avec le pointeau 17 peuvent s'ouvrir et permettre une ventilation de sécurité destinée à faire tomber la pression interne sous une valeur compatible avec un comportement sûr du réservoir.

De même, dans le cas inverse où s'installerait une dépression trop importante dans le réservoir, les lèvres 25 du joint 24 s'ouvrent et permettent l'entrée d'air externe afin de sécuriser l'utilisation du réservoir.

Lorsque le véhicule est en mouvement ou lorsqu'on remplit le réservoir, véhicule à l'arrêt, les gaz en provenance de l'intérieur du réservoir 6 pénètrent le clapet 1 via les orifices 23situés à la partie supérieure du fût 5, d'où ils s'échappent via le conduit 4 et la capacité 2 vers l'extrémité du conduit 10 conduisant au canister. Si, suite par exemple à des mouvements violents du gasoil dans le réservoir lors du remplissage ou d'un déplacement du véhicule avec son réservoir rempli jusqu'à un niveau élevé proche du maximum autorisé, du gasoil était entraîné avec les gaz dans la tubulure 4, il tomberait au fond de la capacité 2 et demeurerait retenu dans celle-ci, alors que les gaz poursuivraient leur chemin vers la sortie 10 et le canister. Dès que le véhicule est à l'arrêt et qu'aucune différence de pression induite par le flux de gaz s'échappant du réservoir ne subsiste, le gasoil retenu prisonnier dans la capacité 2 traverse l'orifice 13, ouvre la membrane 14 sous l'influence de son propre poids, et retourne dans le réservoir 6. La membrane 13 est choisie de manière telle qu'elle se déforme et s'ouvre sous le poids, dans la capacité 2, d'une hauteur d'essence donnée inférieure à la hauteur totale du volume disponible à l'intérieur de la capacité.

Le système de mise à l'air conforme à la figure permet de remplir une fonction intéressante supplémentaire, à savoir la ventilation du réservoir dans les situations de dépression de son atmosphère interne alors que le clapet 1 est fermé. Cette situation peut devenir dangereuse lorsqu'il y a consommation simultanée et prélèvement en continu d'une quantité substantielle de carburant et peut, dans certains cas, donner lieu à l'implosion des parois du réservoir. Elle peut survenir alors que le réservoir est rempli jusqu'à un niveau proche de son niveau maximum et que le véhicule gravit une pente de degré important, provoquant la fermeture du clapet 1 par déplacement du flotteur 3. Dans cette situation, la membrane 14 s'ouvre sous l'influence de la différence de pression de part et d'autre de ses parois due à la dépression qui s'installe dans le réservoir et permet ainsi l'entrée d'air via la capacité 2 connectée avec le conduit 10 menant au canister et à l'atmosphère extérieure.

## Revendications

1. Système de mise à l'air d'un réservoir à liquide (6) comprenant, d'une part, un volume fermé (2) interne au réservoir (6) et muni d'un dispositif de vidange (13, 14), qui fait office de capacité destinée à recueillir et retenir des entraînements éventuels de liquide provenant du réservoir (6) et, d'autre part un clapet à flotteur (1) disposé dans le réservoir (6), et comprenant des moyens pour :
a) la ventilation du réservoir (6), en ce compris lorsque celui-ci est incliné par rapport à la position initiale pour laquelle il a été conçu,
b) l'empêchement de l'éjection de liquide hors du réservoir (6) en cas d'inclinaison de celui-ci ou de production de vagues de liquide à l'intérieur du réservoir,
c) le réglage du volume utile du réservoir (6) et l'empêchement du remplissage du réservoir au-delà d'un niveau prédéterminé,
d) le dégazage du réservoir (6) pendant son remplissage, **caractérisé en ce que** le clapet (1) est situé hors du volume de la capacité et relié à celle-ci au moyen d'un conduit de circuit de mise à l'air et comprend des moyens pour la fermeture automatique du réservoir (6) en cas de retournement de celui-ci.

2. Système de mise à l'air selon la revendication précédente, **caractérisé en ce que** le clapet (1) comprend aussi une soupape (17, 24) équipée d'au moins un joint souple (24).

3. Système de mise à l'air selon une quelconque des revendications précédentes, **caractérisé en ce que** le joint souple (24) de la soupape du clapet (1) est monté sur la tête du clapet (1) et coopère avec la partie mobile (17) de la soupape.

4. Système de mise à l'air selon une quelconque des revendications précédentes, **caractérisé en ce que** la fonction est réalisée au moyen d'une cage à puits (19) ajouré située sous le clapet à flotteur (1), dans laquelle repose une bille dense (18) qui, lorsqu'elle se déplace sous l'effet de la gravité, repousse vers le haut le flotteur (3) du clapet (1) et ferme une soupape (17, 24) dont une partie mobile (17) est solidaire de ce flotteur (3) et est capable d'obturer le conduit de sortie (4) du clapet.

5. Système de mise à l'air selon la revendication 3, **caractérisé en ce que** le joint (24) a une forme annulaire et des lèvres déformables (25) qui assurent aussi la sécurité du réservoir (6) en cas de dépression et en cas de surpression.

6. Système de mise à l'air selon la revendication précédente, **caractérisé en ce que**, dans le joint annulaire (24), des lèvres distinctes assurent la sécurité en dépression et la sécurité en surpression.

7. Système de mise à l'air selon une quelconque des revendications précédentes, **caractérisé en ce que** le dispositif de vidange est constitué par une membrane souple (14) fermant un orifice (13) situé dans un point bas de la capacité.

8. Système de mise à l'air selon la revendication précédente, **caractérisé en ce que** la membrane (14) est réalisée en matériau élastomère en forme de parapluie renversé.

9. Utilisation du système de mise à l'air selon une quelconque des revendications précédentes pour mettre à l'air un réservoir à carburant dans un véhicule automobile.

10. Utilisation du système de mise à l'air selon la revendication précédente, **caractérisé en ce que** le carburant est du gasoil destiné à alimenter un moteur Diesel.

## Patentansprüche

1. Belüftungssystem für einen Flüssigkeitsbehälter (6), der einerseits einen verschlossenen Raum (2) im Inneren des Behälters (6) aufweist, wobei der Raum mit einer Auslaßvorrichtung (13, 14) versehen ist und eine Aufnahme zum Sammeln und Zurückhalten von allfälliger Flüssigkeit aus dem Behälter (6) aufweist, und anderseits ein Schwimmerventil (1), das in dem Behälter (6) angeordnet ist, und Mittel zum:
a) Belüften des Behälters (6), einschließlich in einer Neigungslage desselben relativ zur Ausgangslage, für welche er ausgebildet ist,
b) Verhindern eines Austrittes der Flüssigkeit aus dem Behälter im Falle einer Neigung desselben oder dem Auftreten von Flüssigkeitswellen im Inneren des Behälters,
c) Regeln des Volumens des Behälters (6) und Verhindern eines Füllens des Behälters über das vorbestimmte Niveau hinaus,
d) Entlüften des Behälters während des Füllens, **dadurch gekennzeichnet, daß** das Ventil (1) außerhalb der Aufnahme angeordnet ist und mit dieser über eine Leitung des Entlüftungskreises verbunden ist, wobei Mittel zum automatischen Schließen des Behälters (6) im Falle eines Wendens desselben vorgesehen sind.

2. Belüftungssystem nach dem vorhergehenden Anspruch, **dadurch gekennzeichnet, daß** das Ventil (1) einen Verschluß (17, 24) aufweist, der mit zumindest einer nachgiebigen Dichtung (26) ausgestattet ist.

3. Belüftungssystem nach einem der vorhergehenden Ansprüche, **dadurch gekennzeichnet, daß** die nachgiebige Dichtung (24) des Verschlusses des Ventils (1) auf dem Kopf des Ventils (1) montiert ist und mit dem beweglichen Teil (17) des Verschlusses zusammenwirkt.

4. Belüftungssystem nach einem der vorhergehenden Ansprüche, **dadurch gekennzeichnet, daß** die Funktion des automatischen Schließens des Behälters (6) im Falle eines Wendens mit Hilfe eines Käfigs mit Auslaßdurchbrechungen (19) erfolgt, der unterhalb des Schwimmerventils (1) angeordnet ist, und in welchem eine dichte Kugel (18) ruht, die bei ihrer Verlagerung unter Schwerkraft den Schwimmer (3) des Ventils (1) nach oben drückt und einen Verschluß (17, 24) schließt, dessen beweglicher Teil (17).fest mit dem Schwimmer (3) verbunden ist und befähigt ist, die Austrittsleitung (4) des Ventils zu verschließen.

5. Belüftungssystem nach Anspruch 3, **dadurch gekennzeichnet, daß** die Dichtung (24) Ringform und verformbare Lippen (25) hat, welche die Sicherheit des Behälters (6) sowohl im Falle eines Unterdruckes als auch im Falle eines Überdruckes sicherstellen.

6. Belüftungssystem nach einem der vorhergehenden Ansprüche, **dadurch gekennzeichnet, daß** in der Ringdichtung (24) unterschiedliche Lippen die Sicherheit bei Unterdruck und bei Überdruck sicherstellen.

7. Belüftungssystem nach einem der vorhergehenden Ansprüche, **dadurch gekennzeichnet, daß** die Auslaßvorrichtung eine nachgiebige Membrane (14) aufweist, welche eine Öffnung (19) verschließt, die an einem Punkt unter der Aufnahme angeordnet ist.

8. Belüftungssystem nach einem der vorhergehenden Ansprüche, **dadurch gekennzeichnet, daß** die Membrane (14) aus Elastomermaterial in Form eines umgekehrten Regenschirmes ausgebildet ist.

9. Verwendung des Belüftungssystems nach einem der vorhergehenden Ansprüche zum Belüften eines Kraftstoffbehälters in einem Kraftfahrzeug.

10. Verwendung des Belüftungssystems nach dem vorhergehenden Anspruch, **dadurch gekennzeichnet, daß** der KraftstoffDieselkraftstoff zum Speisen eines Dieselmotors ist.

## Claims

1. System for venting a liquid tank (6) comprising, on the one hand, a closed volume (2) internal to the tank (6) and equipped with a draining device (13, 14) which acts as a capacity intended to collect and hold any entrainment of liquid from the tank (6) and, on the other hand, a float valve (1) arranged in the tank (6), and comprising means for:
a) venting the tank (6), including when the latter is inclined with respect to the initial position for which it was designed,
b) preventing liquid from being ejected from the tank (6) in the event that the latter becomes inclined or in the event that waves of liquid are produced within the tank,
c) regulating the useful volume of the tank (6) and preventing the tank from being filled beyond a predetermined level,
d) degassing the tank (6) while it is being filled, **characterized in that** the valve (1) is situated outside the volume of the capacity and connected to the latter by means of a duct of the air vent circuit and comprises means for automatically shutting off the tank (6) in the event that the latter rolls over.

2. Venting system according to the preceding claim, **characterized in that** the valve (1) also comprises a check valve (17, 24) equipped with at least one flexible seal (24).

3. Venting system according to either one of the preceding claims, **characterized in that** the flexible seal (24) of the check valve part of the valve (1) is mounted on the head of the valve (1) and collaborates with the moving part (17) of the check valve.

4. Venting system according to any one of the preceding claims, **characterized in that** the function of automatically shutting off the tank (6) in the event of a rollover is achieved by means of a cage with a perforated well (19) situated under the float valve (1), in which well cage there rests a dense ball (18) which, when it moves under the effect of gravity, pushes the float (3) of the float valve (1) upwards and closes a valve (17, 24), a moving part (17) of which is secured to this float (3) and capable of blocking off the valve outlet duct (4).

5. Venting system according to Claim 3, **characterized in that** the seal (24) has an annular shape and deformable lips (25) which make the tank (6) safe in the event of depression and in the event of overpressure.

6. Venting system according to the preceding claim, **characterized in that**, in the annular seal (24), different lips provide safety for depression and safety.for overpressure.

7. Venting system according to any one of the preceding claims, **characterized in that** the draining device consists of a flexible diaphragm (14) closing an orifice (13) situated at a low point of the capacity.

8. Venting system according to the preceding claim, **characterized in that** the diaphragm (14) is made of an elastomer in the form of an inverted umbrella.

9. Use of the venting system according to any one of the preceding claims to vent a fuel tank in a motor vehicle.

10. Use of the venting system according to the preceding claim, **characterized in that** the fuel is diesel oil intended to supply a diesel engine.
